# EUROPEAN PATENT APPLICATION

(11) **EP 3 131 009 A1**
(43) Date of publication of application: **15.02.2017**
(21) Application number: 15180744.3
(22) Date of filing: 12.08.2015
(51) Int. Cl.: G06F 9/50, G06F 21/53, G06F 9/455

(54) **MANAGING RUNTIME EXECUTION AND OPERATION OF SUBSTATION FUNCTIONS**

(71) Applicant: ABB Technology AG, 8050 Zürich (CH)
(72) Inventor: Sivanthi, Thanikesavan, 5413 Birmenstorf (CH); Franke, Carsten, 5608 Stetten (CH); Wahler, Michael, 5400 Baden (CH); Thrybom, Linus, 72242 Västeras (SE); Moga, Alexandru, 8800 Thalwil (CH)
(74) Representative: ABB Patent Attorneys

(57) **Abstract**

The present invention is concerned with a method for managing runtime execution and operation of Substation Automation System SAS functions on a centralized device of the SAS, comprising: identifying at least one of the SAS functions that requires isolated runtime execution and operation, based on a predefined SAS configuration including operation and maintenance policy; instantiating a management unit in the centralised device based on the predefined SAS configuration; isolating the management unit in space and time by allocating a dedicated set of hardware resources of the centralised device to the management unit; and managing the runtime execution and operation of the at least one identified SAS function in the management unit. The present invention also concerns a substation automation system that enables to perform the above described method.

## Description

### FIELD OF THE INVENTION

The invention relates to the field of managing the runtime execution and operation of the substation automation system SAS functions, in particular, on a centralised device of the SAS.

### BACKGROUND OF THE INVENTION

The protection, control and monitoring functions of a substation switchyard facility is realized by substation automation systems, SAS. Traditionally, the substation automation systems were built using electromechanical relays that exclusively protected one bay.

The introduction of IEC 61850 standard that defines information and communication structure for electrical substations paved the way for digital communication and Intelligent Electronic Devices, IEDs, in substations. This opened up the possibility for realizing different substation automation system architectures. The architectures can vary from a fully decentralized allocation of SAS functions control functions over multiple bay level IEDs to fully centralized allocation of SAS functions in redundant centralized devices.

In general, a power system utility operates and maintains bays individually. The utility also restricts the operations based on the personnel role, e.g. operator, maintenance staff etc. Therefore, decentralized SAS solutions naturally lend themselves to such policies. As it stands today, a centralized device that hosts multiple functions does not however provide the same level of operation and maintenance of individual bays as in current systems. There are existing techniques that mainly focus on the integration and processing of many functions, for both protection and control, in one device or on a reconfigurable software architecture used IEDs distributed and renewable energy resources. See for example, Strasser, T. et al, "Online Reconfigurable Control Software for IEDs", IEEE Transactions on Industrial Informatics, August 2013; and Johnsson, A. et al, "Standard platform for integrated soft protection and control", IEEE PES Innovative Smart Grid Technologies Conference Europe, ISGT Europe, October 2010.

However, using the current solution, runtime execution and operation of the SAS functions may interfere each other, e.g. if one of the function crashes or hangs the other functions may be affected, due to using common hardware resources of the centralized device.

### DESCRIPTION OF THE INVENTION

It is therefore an objective of the invention to provide a method that can independently control the execution and operation of substation automation systems functions, in particular, the individual bay functions, inside a centralised device according to maintenance and operation policies of a power utility, e.g. bay-centric. It would be one of the decisive features for the widespread adoption of centralized SAS Solutions.

This objective is achieved by a method and a device according to the independent claims. Preferred embodiments are evident from the dependent patent claims.

The present invention provides a method for managing runtime execution and operation of Substation Automation System SAS functions on a centralized device of the SAS. The method comprises the steps of: identifying at least one of the SAS functions that requires isolated runtime execution and operation, based on a predefined SAS configuration including operation and maintenance policy; instantiating or create a management unit in the centralised device based on the predefined SAS configuration; and isolating the management unit in space and time by allocating a dedicated set of hardware resources of the centralised device to the management unit; and managing the runtime execution and operation of the at least one identified SAS function in the management unit.

According to the present invention, the centralized device can manage all SAS functions at a centralized place but allowing independent execution and operation of the functions as if they were executed and operated on separate devices, thus continuing to conform with the traditional operation and maintenance policies.

The predefined SAS configuration file is machine-readable and can include specification of functions to isolate, their allowed operations, e.g., start, stop, and access control; and specification of resource requirements of the functions and the resource constraints. The management unit can be instantiated based on the specified functions according to the operation and maintenance policy, preferably by encapsulating the binaries, their dependencies and control and access APIs inside the management unit.

Using such predefined SAS configuration has several advantages, e.g., the configuration can be re-used as a customizable template across different target centralized devices; and it can be used as an input to an algorithm to derive the optimal resources that are needed in the centralized device and the allocation of the functions to the resources.

The operation of the SAS functions may include start, restart and stop functions as well as update and modify settings. The management unit can be also used in more than one devices, e.g. in a redundant setup.

Preferably, a plurality of the management units can be created or instantiated on the centralised device, each according to the described steps above. Thus, isolating the plurality of the management units in space and time means partitioning the hardware resources simultaneously in space and time for the management units, so that each of the management units has dedicated - but not necessarily exclusive - hardware resources of the centralised device. In other words, the centralised device can host a number of management units, each isolated from other. Therefore, the SAS functions running in one management unit will not interrupt the other SAS functions running in other management units. That is according to the present invention, the management of runtime execution and operation of the SAS functions on one particular management unit is independent of other management units, i.e., without affecting the execution and operation of other management units.

According to another aspect, the present invention provides a Substation Automation System SAS for managing runtime execution and operation of SAS functions on a centralized device of the SAS, configured to: identify at least one of the SAS functions that requires isolated runtime execution and operation, based on a predefined SAS configuration including operation and maintenance policy; instantiate a management unit in the centralised device based on the predefined SAS configuration; isolate the management unit in space and time by allocating a dedicated set of hardware resources of the centralised device to the management unit; and manage the runtime execution and operation of the at least one identified SAS function in the management unit.

According to an exemplary embodiment of the present invention, the step of isolating the management unit in space and time comprising: statically allocating and scheduling the management unit to the dedicated set of hardware resources of the centralized device; and routing an input and output of the management unit to and from an input and output of the centralized device.

According to an exemplary embodiment of the present invention, the input and output of the management unit and of the centralised device include at least one the followings: at least one network port, at least one analogue or binary I/O, or at least one Human Machine Interface HMI input and output.

According to an exemplary embodiment of the present invention, multiple virtual Intelligent Electronic Devices IEDs are hosted by the centralised device, each of the IEDs representing one physical IED.

According to an exemplary embodiment of the present invention, the method further comprising: creating or instantiating the management unit as a container or a virtual machine running on the operating system of the centralised device; and encapsulating the at least one identified SAS function including its dependencies in a standardized unit into the container or the virtual machine. This enables easily portable to different physical devices, as long as they are running the same underlying operating system kernel, without the need of a hardware abstraction layer, thereby allowing functions to fully harness the underlying operating system and hardware resources.

According to an exemplary embodiment of the present invention, the hardware resources include at least one CPU, preferably at least one multi-core CPU, memory, and at least one network interface of the centralised device.

The present invention also relates to a computer program product including computer program code for performing the aforementioned method steps, particularly, a computer program product including a computer readable medium containing therein the computer program code.

The present invention addresses one of the decisive features for the widespread adoption of centralized SAS Solutions, i.e., it bridges the gap between traditional distributed SAS solutions and centralized ones.

The method according to the present invention can also facilitate failover or backup concepts by means of which smooth function upgrades, updates and addition of new functions is possible. Further, the method provides separation of system engineering from application engineering, allowing it to be used in various stages of project lifecycle as well as new product development.

### BRIEF DESCRIPTION OF THE DRAWINGS

The subject matter of the invention will be explained in more detail in the following text with reference to preferred exemplary embodiments which are illustrated in the attached drawing, in which:

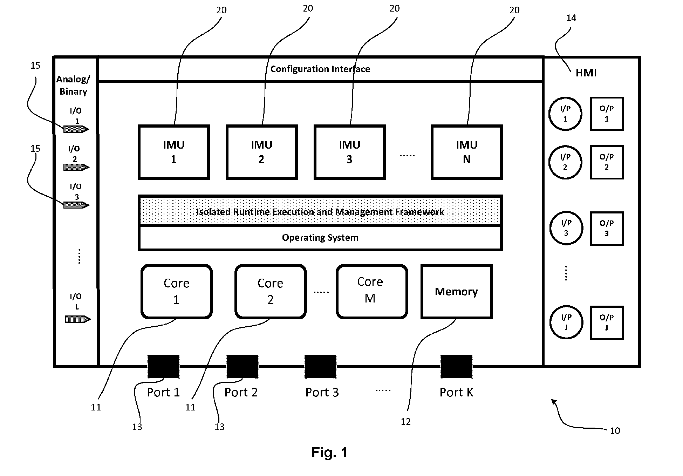

Fig. 1 schematically shows a framework for isolated execution and management of the SAS functions according to the present invention.

The reference symbols used in the drawings, and their primary meanings, are listed in summary form in the list of designations. In principle, identical parts are provided with the same reference symbols in the figures.

### DETAILED DESCRIPTION OF PREFERRED EMBODIMENTS

Fig.1 shows a framework for isolated execution and management of the SAS functions according to the present invention. According to the present invention, the method or the SAS isolates the runtime execution and operation of SAS functions inside a centralized device 10.

In particular, a plurality of isolated management units IMUs 20 are instantiated on the centralised device 10. An IMU can comprise the same SAS functions that compose a physical IED or it may consist of individual functions, e.g., bay control, bay protection, etc. The IMUs 20 can be realized based on hardware-level virtualization, e.g. using bare-metal hypervisors, or operating system OS-level virtualization, e.g. using Linux containers and Docker. The latter technology is particularly attractive since that:
(a) the SAS functions and their dependencies can be encapsulated in a standardized unit that is easily portable to different physical devices, as long as they are running the same underlying operating system kernel, without the need of a hardware abstraction layer, thereby allowing functions to fully harness the underlying operating system and hardware resources; and
(b) executing and managing the runtime of substation automation functions on the same device 10 are in complete isolation and with little to no overhead caused by virtualization.

The SAS functions that require independent management and running them inside isolated management units IMUs 20 are identified and grouped, based on a predefined configuration according to operation and maintenance policies of the SAS. According to the present invention, a framework can be created, that provides separation of execution in space and time, e.g. CPU, memory, network bandwidth, and independent operation of the IMUs in a centralized device based on a configuration that is defined according to operation and maintenance policies. The method proposed by the present invention employs a framework that has the following capabilities:
1) runtime management capabilities at the IMU level, e.g., start, stop or restart functionality such that the execution of other IMUs on the same centralized device is not hindered;
2) spatial and temporal partitioning of hardware resources, e.g. CPU cores and memory, for executing and operating multiple IMUs; to this end, the framework provides:
   - static allocation and scheduling of IMUs to a set of underlying resources, e.g., dedicated CPU cores, memory, network ports; and
   - routing of network data to and from IMUs to a set of dedicated network ports belonging to the centralized device. Likewise, for the analog or binary I/O data to and from IMUs to their respective analog or binary channels, also part of the centralized device's I/O interface. Furthermore, the routing of control inputs from the HMI to the corresponding IMU and the information feedback from the IMU to the corresponding HMI outputs;
3) configuration interface via which the static allocation, scheduling and routing can be configured using an engineering tool.

As an exemplary realization of the invention, there are *"N"* IMUs 20 that can be allocated to "*M*" cores 11. The network data for each IMU 20 can be routed via the "*K*" network ports 13. The analogue or binary data for each IMU 20 can be mapped to the "*L*" analogue/binary channels 15, and each IMU 20 can be locally operated via the HMI interfaces 14.

In an exemplary embodiment, the present invention can be applied to the realization of centralized devices in the following ways:
(i) For building different types of testing environments, e.g. during development of new functions or during FAT. For instance, the functions that are to be allocated to a physical IED, e.g. as per the project requirements, can be encapsulated inside an IMU 20 and tested in a system context on a testing machine. After the testing, the IMU 20 is transferred as is to the physical IED, i.e. the commissioned IED.
(ii) Allowing unobtrusive maintenance (see embodiment below), whereby specific functions executed inside IMUs on a centralized IED can be turned off, re-started, placed in testing mode and/or updated without the need to stop the IED or affecting the execution of other functions on the same IED.

According to an exemplary implementation of the present invention, the maintenance engineer is responsible for adapting the protection settings. The adaptation of protection setting is typically done for one bay at a time. The protection equipment as well as the protection device of a bay unit are disconnected before such changes, in order to avoid tripping an operational bay. The protection device with the new protection settings has to be tested before it is put into operation. The whole process has to be carried out on the protection device without affecting the operation of the other bay units whose protection functions are also running on the same centralized device.

Accordingly, the functions corresponding to the bay protection device are grouped into IMUs that are running on the same centralized IED.

In order to adapt the protection settings for one of the IMUs, the protection engineer stops the corresponding IMU using the runtime management capabilities and disconnects I/Os and/or network channels by instructing the routing framework to do so.

The IMU with the new protection settings can be re-started in test mode and can be tested by connecting the I/Ps and network channels to testing devices or simulators.

After the after complete test the IMU can be re-started in normal operation mode and reconnected to the bay process.

The whole process can be carried out independently of the other bay unit functions that are running in the same centralized IED.

While the invention has been described in detail in the drawings and foregoing description, such description is to be considered illustrative or exemplary and not restrictive. Variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

### LIST OF DESIGNATIONS

- 10: Centralised device
- 11: CPU or core of CPU
- 12: Memory
- 13: Network port
- 14: HMI
- 15: analogue or binary I/O
- 20: Management unit

## Claims

1. Method for managing runtime execution and operation of Substation Automation System SAS functions on a centralized device (10) of the SAS, comprising:
identifying at least one of the SAS functions requiring isolated runtime execution and operation, based on a predefined SAS configuration including operation and maintenance policy;
instantiating a management unit (20) in the centralised device based on the predefined SAS configuration;
isolating the management unit in space and time by allocating a dedicated set of hardware resources (11, 12, 13, 14, 15) of the centralised device (10) to the management unit (20); and
managing the runtime execution and operation of the at least one identified SAS function in the management unit (20).

2. Method according to claim 1, wherein the step of isolating the management unit (20) in space and time comprises:
statically allocating and scheduling the management unit to the dedicated set of the hardware resources (11, 12, 13, 14, 15) of the centralized device; and
connecting an input and output of the management unit to and from an input and output of the centralized device.

3. Method according to claim 2, wherein the input and output of the management unit and of the centralised device include at least one the followings: at least one network port (13), at least one analogue or binary I/O (15), or at least one Human Machine Interface HMI input and output (14).

4. Method according to any one of preceding claims, wherein multiple virtual Intelligent Electronic Devices IEDs are instantiated on the centralised device, each of the virtual IEDs representing one physical IED.

5. Method according to any one of preceding claims, further comprising:
instantiating the management unit (20) as a container or a virtual machine running on an operating system of the centralised device (10); and
encapsulating the at least one identified SAS function including its dependencies into the container or the virtual machine to obtain a preconfigured management unit.

6. Method according to claim 1 or 2, wherein the hardware resources (11, 12, 13, 14, 15) of the centralised device (10) include multiple CPUs or at least one multi-core CPU, memory, and at least one network interface.

7. A centralized device (10) in a substation automation system SAS and for managing runtime execution and operation of SAS functions on of the SAS, wherein the centralised device is configured to:
identify at least one of the SAS functions that requires isolated runtime execution and operation, based on a predefined SAS configuration including operation and maintenance policy;
instantiating a management unit (20) in the centralised device (10) based on the predefined SAS configuration;
isolate the management unit (20) in space and time by allocating a dedicated set of hardware resource (11, 12, 13, 14, 15) of the centralised device (10) to the management unit (20); and
manage the runtime execution and operation of the at least one identified SAS function in the management unit (20).

8. The centralized device according to claim 7, further configured to:
statically allocate and schedule the management unit (20) to the dedicated set of the hardware resources (11, 12, 13, 14, 15) of the centralized device; and
connect an input and output of the management unit (20) to and from an input and output of the centralized device.

9. The centralized device according to claim 7 or 8, wherein the input and output of the management unit and of the centralised device include at least one the followings: at least one network port (13), at least one analogue or binary I/O (15), or at least one Human Machine Interface HMI input and output (14).

10. The centralized device according to any one of claims 7 to 9, wherein the centralised device comprising multiple virtual Intelligent Electronic Devices IEDs, each representing one physical IED.

11. The centralized device according to any one of claims 7 to 10, configured to:
instantiate the management unit (20) as a container or a virtual machine running on the operating system of the centralised device (10); and
encapsulate the at least one identified SAS function including its dependencies in a standardized unit into the container or the virtual machine.

12. The centralized device according to any one of claims 7 to 11, wherein the hardware resources (11, 12, 13, 14, 15) of the centralised device (10) includes at least one multi-core CPU, memory, and at least one network interface.

13. Substation automation system comprising the centralized device for managing runtime execution and operation of SAS functions on of the SAS, according to any one of the claims 7 to12.

14. Computer readable medium including computer program code for performing the steps according to any one of claims 1 to 6.
